# EUROPÄISCHE PATENTSCHRIFT

(11) **EP 0 900 615 B1**
(45) Veröffentlichungstag und Bekanntmachung des Hinweises auf die Patenterteilung: **17.04.2002**
(21) Anmeldenummer: 98116548.3
(22) Anmeldetag: 02.09.1998
(51) Int. Cl.: B23D 33/02

(54) **Vorrichtung zum Schopfen und Auslenken einer Walzader**
Apparatus for cutting and evacuating rolled products
Dispositif pour le découpage et l'évacuation de produits de laminage

(30) Priorität: 03.09.1997 DE 19738470
(43) Veröffentlichungstag der Anmeldung: 10.03.1999
(73) Patentinhaber: Bollig, Georg Dr., 47799 Krefeld (DE)
(72) Erfinder: Bollig, Georg Dr., 47799 Krefeld (DE)
(74) Vertreter: Rayling, Burkhard

(56) Entgegenhaltungen:
- DE-A- 4 019 879
- US-A- 2 701 016

## Beschreibung

Die Erfindung betrifft eine Vorrichtung zum Schopfen und Auslenken einer Walzader die sich mit hoher Geschwindigkeit bewegt, wobei die Walzader durch ein Weichenrohr zwangsweise zwischen zwei übereinander angeordneten und mit je einem Messer versehenen Messerköpfen geführt wird und wobei ein nicht qualitätsgerechtes Anfangsstück der Walzader abgetrennt wird und das abgetrennte Schopfstück sowie die Gutader in ein nachgeordnetes Auslaufteil mit voneinander getrennten Führungskanälen einlaufen.

Es ist bekannt, in Walzstraßen eine bewegte Walzader mit Walzgeschwindigkeit zu schopfen bzw. zu trennen, um z. B. in den nachfolgenden Walzgerüsten die Anstichbedingungen zu verbessern oder um nicht qualitätsgerechte Bereiche abzutrennen und dem Schrott zuzuführen.
In Anpassung an die hohen Walzgeschwindigkeiten erfolgt z. B. das Schopfen bzw. Trennen der Walzader mittels fliegender Scheren (EP 0 297 313 B1; DE 35 23 046 A1).
Diese Scheren stellen mit ihren hohen Drehzahlen und den erforderlichen minimalen Schaltzeiten für nachfolgende Weichen sehr komplizierte mechanische Systeme dar. Für die Beschleunigung der zugehörigen Weichensysteme sind hohe Antriebsleistungen erforderlich. Der mechanische Verschleiß an den Schneidmessern und den Weichenteilen ist erheblich.
Bei Walzgeschwindigkeiten von über 100 m/s sind diese Systeme regelungstechnisch und durch die Beschleunigungskräfte mechanisch nur noch mit großem technischen Aufwand zu beherrschen.
Um angemessene Schaltzeiten der Weichen zu erzielen, werden in der Praxis die Weichensysteme sehr lang ausgeführt.

Nach der DD 145 237 ist es bekannt, das aus mehreren Führungskanälen bestehende Auslaufteil horizontal schwenkbar auszuführen. Die Walzader wird dann zu nachfolgend angeordneten Maschinen geleitet oder die abgeschnittenen Enden einer geeigneten Schrottentsorgung zugeführt. Die Schwenkbarkeit wird mittels eines Linearantriebes gewährleistet.
Das Problem der zu realisierenden hohen Schaltzeiten von 1/10 Sekunden ist auch mit dieser Maßnahme nicht zufriedenstellend gelöst.
Mit der DE 32 37 171 A1 ist weiterhin eine Führungseinrichtung in Form eines segmentartigen Abweisers zum Auslenken der Walzader offenbart worden, wobei dieser in Anlage mit dem gewalzten Gut gebracht wird, um dieses in die entsprechenden Führungskanäle auszulenken.
Als nachteilig ist hierbei herauszustellen, daß durch die direkte Berührung der Walzader mit dem Abweiser das Ausbrechen der Walzader bei hohen Walzadergeschwindigkeiten und somit eine Havarie nicht absolut ausgeschlossen werden kann.
Zur Lösung des Problems der kurzen zu realisierenden Schaltzeiten für nachfolgende Weichensysteme wird mit der DD 218 852 ein anderer Weg beschritten, um Schopfstück und Gutader im Anschluß an den Trennschnitt in verschiedene Führungskanäle zu lenken, nämlich derart, daß beim Zerteilvorgang das weglaufende Schopfstück (Schrottstück) vom voreilenden Obermesser nach unten gedrückt sowie die nachfolgende Gutaderspitze vom nacheilenden Untermesser angehoben wird. Mit dieser Maßnahme wird die Bewegung des Schrottstückes in den abwärts angeordneten Schrottführungskanal des Auslaufteiles sowie die Bewegung der nachfolgenden Gutader in den oberhalb angeordneten Gutaderkanal unterstützt. Die Messerköpfe sind dabei so ausgestaltet, daß ausgehend von der mittleren Messerbrustfläche zur gegenüberliegenden Messerrückseite, der Messerkopfdurchmesser sich vergrößert und in Höhe der Messeroberkante ausläuft.
Diese vorgeschlagene Lösung mag geeignet sein, den hohen Walzgeschwindigkeiten zu entsprechen. Jedoch ist zum einen von einem erheblichen Kostenaufwand für die besondere Gestaltung der Messerköpfe auszugehen. Zum anderen ist festzustellen, daß der Effekt der Ablenkung der Walzader auch von der Stahlqualität und den Walzbedingungen abhängig ist und somit nicht in jedem Fall die gewünschte Auslenkung zuverlässig realisiert wird, da es an einer Zwangsführung der Walzader nach dem Schnitt fehlt.
An dieser Stelle setzt die nachfolgend beschriebene Erfindung an.

Aufgabe der vorliegenden Erfindung ist es, die Nachteile des eingangs geschilderten Standes der Technik zu vermeiden und eine Vorrichtung zum Schopfen und Auslenken einer Walzader zu schaffen, die mit geringem maschinentechnischen Aufwand, einen zuverlässigen Schnitt der Walzader mit anschließender Auslenkung von Schopfstück und Gutader in getrennte Führungskanäle eines fest angeordneten Auslaufteiles auch bei Walzgeschwindigkeiten > 100 m/s gewährleistet.
Insbesondere soll auf komplizierte, kostenintensive und störungsanfällige Weichensysteme im Bereich des Auslaufteils verzichtet werden.

Erfindungsgemäß wird die Aufgabe in Verbindung mit den Merkmalen im Oberbegriff des Anspruches 1 dadurch gelöst, daß am Umfang des Messerkopfes mit dem vorlaufenden Messer in Rotationsrichtung gesehen unmittelbar seitlich vor dem Messer sowie am Umfang des Messerkopfes mit dem nachlaufenden Messer in Rotationsrichtung gesehen nach dem Messer, jedoch auf der gegenüberliegenden Seite, jeweils eine Finne fest angeordnet ist und die Drehachsen der beiden Messerköpfe derart in der horizontalen Ebene um einen Winkel β zur Walzrichtung hin geneigt sind, daß mittels der vorlaufenden Finne vor, während und nach dem Trennschnitt das Ende des vorlaufenden Schopfstückes zu einer Seite hin und mittels der nachlaufenden Finne vor, während und nach dem Trennschnitt der Anfang der nachlaufenden Gutader zur gegenüberliegenden Seite hin, jeweils mit sich zeitlich ändernder Überdeckung, im Sinne einer Zwangsführung ablenkbar sind.

In besonders vorteilhafter Ausgestaltung sind die Drehachsen der Messerköpfe in der horizontalen Ebene jeweils um einen Winkel β von 3° bis 7°, vorzugsweise 5°, zur Walzrichtung hin geneigt.
Weiterhin wird vorgeschlagen, daß die über den Umfang der Messerköpfe gemessene Länge der Finnen ¼ bis ¹/₆ des Umfanges der Messerköpfe beträgt.
Eine weitere zweckmäßige Maßnahme sieht vor, daß zur Minimierung der Relativgeschwindigkeit zwischen Walzader und Finnen die Rotationsgeschwindigkeit der Messerköpfe mit der Geschwindigkeit der sich bewegenden Walzader annähernd übereinstimmt.

In vorteilhafter Weise wurde mit obigen Maßnahmen der Stand der Technik dahingehend verbessert, daß hier eine Lösung geschaffen wurde, die einfach und kostengünstig ist und sowohl einen zuverlässigen Schnitt der Walzader in Schrott- und Gutader als auch eine qualitätsgerechte Auslenkung derselben in den geforderten Schaltzeiten in getrennte Führungskanäle eines fest angeordneten Auslaufteiles gewährleistet.
Weitere Einzelheiten, Merkmale und Vorteile der Erfindung ergeben sich aus der nachstehenden Erläuterung eines in den Zeichnungen schematisch dargestellten Ausführungsbeispieles.

Es zeigen:
- Fig. 1:: Seitenansicht der Vorrichtung zum Schopfen und Auslenken einer Walzader
- Fig. 2:: Schnitt A-A nach Fig. 1
- Fig. 3:: Draufsicht nach Fig. 1
- Fig. 4:: Situation zum Zeitpunkt t₂₁ während des Trennschnittes der Walzader in der Vorrichtung
- Fig. 5:: Situation zum Zeitpunkt t₂₂ unmittelbar nach dem Trennschnitt

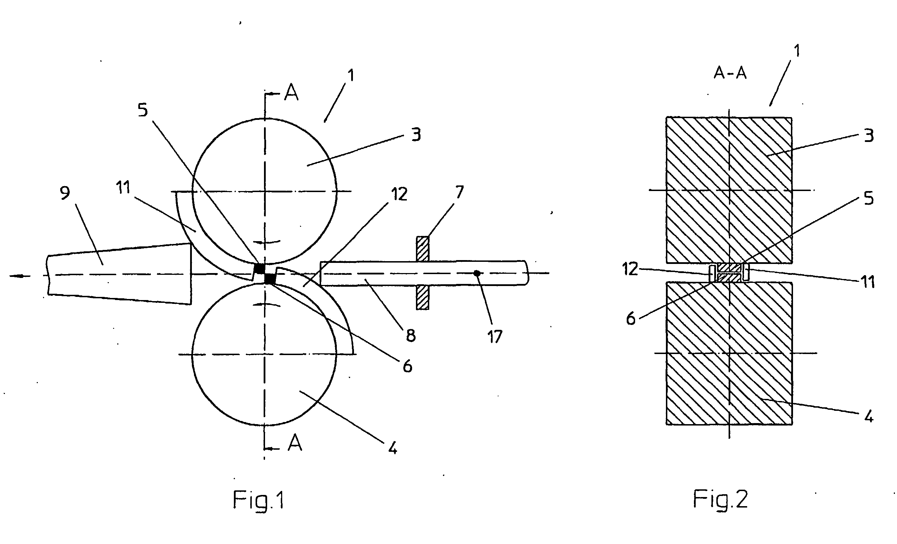

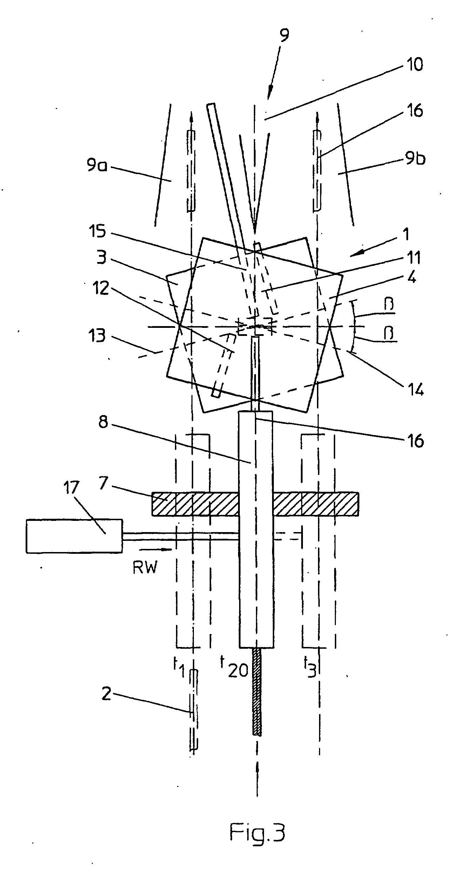

Die Vorrichtung 1 zum Schopfen und Auslenken der Walzader 2 ist überwiegend in der Walzlinie im Anschluß an eine nicht näher dargestellte Kühlstrecke bzw. vor einem Windungsleger angeordnet.
Gemäß Fig. 1 besteht die Vorrichtung 1 aus zwei übereinander angeordneten Messerköpfen 3; 4, denen jeweils an ihrem Umfang ein Messer 5; 6 zugeordnet ist.
In vorliegendem Ausführungsbeispiel werden das Messer 5 des Messerkopfes 3 auch als vorlaufendes Messer 5 und das Messer 6 des Messerkopfes 4 auch als nachlaufendes Messer 6 bezeichnet.
Des weiteren ist der Vorrichtung 1 ein ansich bekanntes in einer Verschiebekulisse 7 horizontal verschiebbares Weichenrohr 8 vorgeordnet. In Walzrichtung gesehen schließt sich der Vorrichtung 1 ein fest angeordnetes Auslaufteil 9 an, das seinerseits aus zwei durch einen Führungskeil 10 voneinander getrennten Führungskanälen 9a und 9b besteht (Fig. 3).
Erfindungsgemäß ist am Umfang des Messerkopfes 3 mit dem vorlaufenden Messer 5 in Rotationsrichtung gesehen unmittelbar seitlich vor dem Messer 5 eine Finne 11 fest angeordnet. Am Umfang des Messerkopfes 4 mit dem nachlaufenden Messer 6 ist dagegen in Rotationsrichtung gesehen eine Finne 12 auf der gegenüberliegenden Seite und dem Messer 6 nachlaufend fest angeordnet.
Es hat sich als zweckmäßig erwiesen, wenn die über dem Umfang der Messerköpfe 3; 4 gemessene Länge der jeweiligen Finne 11; 12 ¼ bis ¹/₆ des Umfanges des zugehörigen Messerkopfes 3; 4 beträgt.
Weiterhin ist als erfindungswesentlich herauszustellen, daß, wie in Fig. 3 dargestellt, die Drehachsen 13 bzw. 14 der beiden Messerköpfe 3; 4 derart in der horizontalen Ebene um einen Neigungswinkel β zur Walzrichtung hin geneigt sind, daß die vorlaufende Finne 11 vor, während und nach dem Trennschnitt das Ende des vorlaufenden Schopfstückes 15 der Walzader 2 zu einer Seite hin und die nachlaufende Finne 12 vor, während und nach dem Trennschnitt den Anfang der nachlaufenden Gutader 16 der Walzader 2 zur gegenüberliegenden Seite hin, jeweils mit sich zeitlich ändernder Überdeckung I₁ bzw. I₂, im Sinne einer Zwangsführung ablenkt. Die Drehachsen 13; 14 der Messerköpfe 3; 4 sind vorteilhafterweise in der horizontalen Ebene um einen Neigungswinkel β von 3° bis 7°, vorzugsweise 5°, zur Walzrichtung hin geneigt.

Als wesentlich hat sich des weiteren gezeigt, daß zur Minimierung der Relativgeschwindigkeit zwischen Walzader 2 und den Finnen 11; 12 und damit des Verschleißes derselben, die Rotationsgeschwindigkeit der Messerköpfe 3; 4 mit der Geschwindigkeit der sich bewegenden Walzader 2 annähernd übereinstimmt.

Im Nachfolgenden wird die Funktionsweise der Erfindung näher beschrieben:

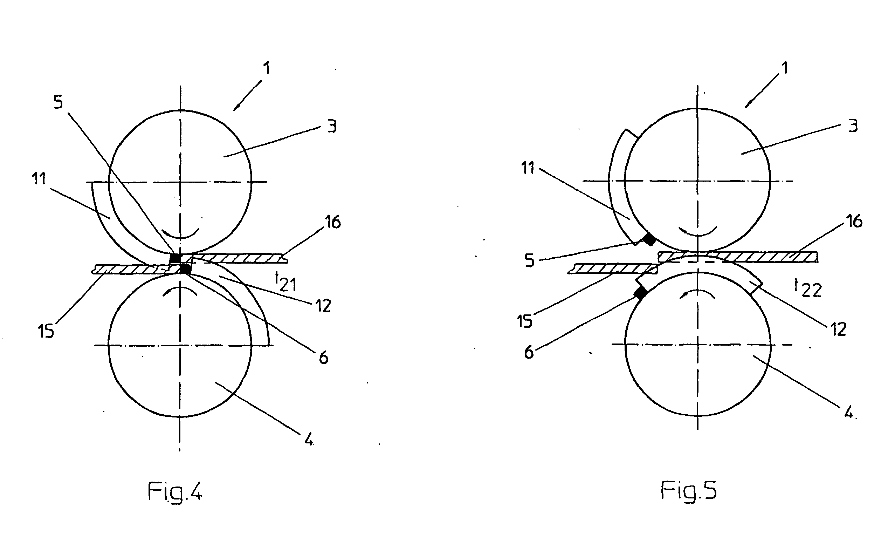

Wie in Fig. 3 gezeigt, wird zum Zeitpunkt t₁ die Walzstabspitze der Walzader 2 durch das Weichenrohr 8 hindurch linksseitig an der nachlaufenden Finne 12 vorbei in den Führungskanal 9a für das Schopfstück 15 geführt.
Zur Einleitung des Trennschnittes zur Trennung des Schopfstückes 15 von der Gutader 16 wird das Weichenrohr 8 innerhalb der Verschiebekulisse 7 mittels eines Linearantriebes 17 nach einer definierten Weg-Zeitkurve und zu einem definierten Zeitpunkt, der seinerseits mit einer bestimmten Winkelstellung der Messerköpfe 3; 4 synchronisiert ist, in der horizontalen Ebene in die Bewegungsrichtung Rw gestartet, so daß das Weichenrohr 8 sowie die Walzader 2 zum Zeitpunkt t₂₀ die Schnittposition im Wirkbereich der Messer 5; 6 erreicht.
Die Bewegung des Weichenrohres 8 und der Messerköpfe 3; 4 wird derart synchronisiert, daß die Walzader 2 den erforderlichen Weg quer zur Walzrichtung innerhalb von ca. einer ¾ Umdrehung der Messerköpfe 3; 4 zurücklegt, jedoch die vorlaufende Finne 11 noch nicht den Bereich der Walzader 2 erreicht hat und somit eine Überdeckung und gegebenenfalls ein Anstoßen der Walzader 2 an der Finne 11 während der Querbewegung ausgeschlossen wird.
Zum Zeitpunkt t₂₁ erfolgt, wie in Fig. 4 dargestellt, der eigentliche Trennschnitt, wobei die vorlaufende Finne 11 die Walzader 2, insbesondere das nachlaufende Ende des Schopfstückes 15 überdeckt und sowohl den Trennschnitt ansich als auch den Drahtlauf durch die Zwangsführung, hervorgerufen durch die erfindungswesentliche Neigung der Drehachse 13 des vorlaufenden Messerkopfes 3, positiv beeinflußt bzw. unterstützt. Unmittelbar nach dem Trennschnitt läuft zum Zeitpunkt t₂₂ (Fig. 5) das Ende des vorlaufenden Schopfstückes 15 weiter in den Führungskanal 9a ein und wird dabei durch die vorlaufende Finne 11 mit anfangs zunehmender und danach abnehmender Überdeckung l₁ im Sinne einer Zwangsführung abgelenkt und z. B. gegen Umschlagen um den Führungskeil 10 gestützt. Gleichzeitig wird der Anfang der nachlaufenden Gutader 16 von der nachlaufenden Finne 12 mit vorerst zunehmender und danach abnehmender Überdeckung I₂ zur gegenüberliegenden Seite hin ebenfalls im Sinne einer Zwangsführung in den Führungskanal 9b für die Gutader 16 abgelenkt.
Auch hier ist der vorbeschriebene Ablenkungs- und Stützeffekt gegeben. Hat der Anfang der Gutader 16 den zugehörigen Führungskanal 9b erreicht, wird das Weichenrohr 8 in Richtung Rw weiter fortbewegt, so daß die Walzader 2 den Schnittbereich der Vorrichtung 1 verläßt und zum Zeitpunkt t₃ eine solche Position einnimmt, daß eine annähernd geradlinige Führung der Gutader 16 in den Führungskanal 9b des Auslaufteiles 9 gewährleistet ist.
Hat die Gutader 16 das Weichenrohr 8 vollständig durchlaufen, wird das Weichenrohr 8 in der Walzpause wieder in die Ausgangsposition (Zeitpunkt t₁) zurückgeführt.
Für den erforderlichen Linearantrieb 17 werden elektro-hydraulische Stellgeräte als geeignet angesehen, um die erforderliche Geschwindigkeit für eine konstante Querbewegung des Weichenrohres 8 von der Position zum Zeitpunkt t₁ bis zur Ruheposition zum Zeitpunkt t₃ zu realisieren.

Bei 100 m/s Walzgeschwindigkeit und ca. 800 mm Messerkopfdurchmesser beträgt beispielsweise die Zeit für eine Umdrehung der Messerköpfe 3; 4 (0,8 x π) : 100 = 0,0025 Sekunden.
Den Weg von der Ausgangsposition zum Zeitpunkt t₁ bis zur Schnittposition zum Zeitpunkt t₂ muß daher das Weichenrohr 8 in ca. 0,75 x 0,025 = 0,019 Sekunden zurücklegen.
Bei 800 mm Messerkopfdurchmesser und einen Neigungswinkel β der Drehachsen 13; 14 der Messerköpfe 3; 4 von 5°, beträgt der zurückzulegende Weg max. 80 mm.
Demnach ist eine Beschleunigung des Weichenrohres 8 bei einer ¾ Umdrehung der Messerköpfe 3; 4 von 0,08 m : 0,019 s = 4,2 m/s zu gewährleisten.

## Patentansprüche

1. Vorrichtung zum Schopfen und Auslenken einer Walzader die sich mit hoher Geschwindigkeit bewegt, wobei die Walzader durch ein Weichenrohr zwangsweise zwischen zwei übereinander angeordneten und mit je einem Messer versehenen Messerköpfen geführt wird und wobei ein nicht qualitätsgerechtes Anfangsstück der Walzader abgetrennt wird und das abgetrennte Schopfstück sowie die Gutader in ein nachgeordnetes Auslaufteil mit voneinander getrennten Führungskanälen einlaufen,
**dadurch gekennzeichnet,**
**daß** am Umfang des Messerkopfes (3) mit dem vorlaufenden Messer (5) in Rotationsrichtung gesehen unmittelbar seitlich vor dem Messer (5) sowie am Umfang des Messerkopfes (4) mit dem nachlaufenden Messer (6) in Rotationsrichtung gesehen nach dem Messer (6), jedoch auf der gegenüberliegenden Seite, jeweils eine Finne (11; 12) fest angeordnet ist und die Drehachsen (13; 14) der beiden Messerköpfe (3; 4) derart in der horizontalen Ebene um einen Neigungswinkel β zur Walzrichtung hin geneigt sind, daß mittels der vorlaufenden Finne (11) vor, während und nach dem Trennschnitt das Ende des vorlaufenden Schopfstückes (15) zu einer Seite hin und mittels der nachlaufenden Finne (12) vor, während und nach dem Trennschnitt der Anfang der nachlaufenden Gutader (16) zur gegenüberliegenden Seite hin, jeweils mit sich zeitlich ändernder Überdeckung , im Sinne einer Zwangsführung ablenkbar sind.

2. Vorrichtung nach Anspruch 1,
**dadurch gekennzeichnet,**
**daß** die Drehachsen (13; 14) der Messerköpfe (3; 4) in der horizontalen Ebene jeweils um einen Neigungswinkel β von 3° bis 7°, vorzugsweise 5°, zur Walzrichtung hin geneigt sind.

3. Vorrichtung nach Anspruch 1 und 2,
**dadurch gekennzeichnet,**
**daß** die über den Umfang der Messerköpfe (3; 4) gemessene Länge der Finnen (11; 12) ¼ bis ¹/₆ des Umfanges der Messerköpfe (3; 4) beträgt.

4. Vorrichtung nach einem oder mehreren der Ansprüche 1 bis 3,
**dadurch gekennzeichnet,**
**daß** zur Minimierung der Relativgeschwindigkeit zwischen Walzader (2) und Finnen (11; 12) die Rotationsgeschwindigkeit der Messerköpfe (3; 4) mit der Geschwindigkeit der sich bewegenden Walzader (2) annähernd übereinstimmt.

## Claims

1. Device for the cropping and deflection of a rolled product string, which moves at high speed, the rolled product string being guided by a switch tube positively between two knife heads arranged one above the other and each provided with a knife, and an initial piece, not up to quality, of the rolled product string being detached, and the detached cropped piece and also the good string running into a following exit part having guide channels separate from one another, **characterized in that** a fin (11; 12) is fixedly arranged in each case on the circumference of the knife head (3) having the leading knife (5), directly laterally upstream of the knife (5), as seen in the direction of rotation, and also on the circumference of the knife head (4) having the trailing knife (6), downstream of the knife (6), as seen in the direction of rotation, but on the opposite side, and the axes of rotation (13; 14) of the two knife heads (3; 4) are inclined at an angle of inclination β to the rolling direction in the horizontal plane, in such a way that, with the effect of positive guidance, the end of the leading cropped piece (15) can be deflected to one side by means of the leading fin (11) before, during and after the severing cut and the start of the trailing good string (16) can be deflected to the opposite side by means of the trailing fin (12) before, during and after the severing cut, in each case with an overlap which changes in time.

2. Device according to Claim 1, **characterized in that** the axes of rotation (13; 14) of the knife heads (3; 4) are in each case inclined at an angle of inclination • of 3° to 7°, preferably 5°, to the rolling direction in the horizontal plane.

3. Device according to Claims 1 and 2, **characterized in that** the length of the fins (11; 12), which is measured over the circumference of the knife heads (3; 4), is 1/4 to 1/6 of the circumference of the knife heads (3; 4).

4. Device according to one or more of Claims 1 to 3, **characterized in that**, to minimize the relative speed between the rolled product string (2) and the fins (11; 12), the rotational speed of the knife heads (3; 4) is approximately identical to the speed of the moving rolled product string (2).

## Revendications

1. Dispositif pour couper et dévier un fil de laminage se déplaçant à grande vitesse, le fil de laminage étant guidé de force à travers un tube d'aiguillage entre deux têtes de coupe disposées l'une au-dessus de l'autre et pourvues chacune d'une lame de coupe, et un bout du fil de laminage non conforme du point de vue de la qualité étant séparé et la pièce coupée séparée ainsi que le produit en fil étant acheminés dans une partie d'évacuation subséquente comprenant des conduits de guidage séparés l'un de l'autre,
**caractérisé en ce que,**
à la périphérie de la tête de coupe (3) avec la lame de coupe (5) avant, vu dans le sens de rotation, directement latéralement avant la lame de coupe (5) ainsi qu'à la périphérie de la tête de coupe (4) avec la lame de coupe (6) arrière, vu dans le sens de rotation, après la lame de coupe (6), mais du côté opposé, une aile respective (11 ; 12) est disposée fixement et les axes de rotation (13 ; 14) des deux têtes de coupe (3 ; 4) sont inclinés de telle sorte dans le plan horizontal d'un angle d'inclinaison β par rapport à la direction de laminage, qu'avant, pendant et après la coupure de séparation, l'extrémité de la pièce découpée avançant (15) peut être déviée d'un côté au moyen de l'aile avant (11), et avant, pendant et après la coupure de séparation, le début du produit en fil suivant (16) peut être dévié vers le côté opposé, au moyen de l'aile arrière (12), par guidage forcé, à chaque fois avec un recouvrement variable dans le temps.

2. Dispositif selon la revendication 1, **caractérisé en ce que** les axes de rotation (13 ; 14) des têtes de coupe (3 ; 4) sont inclinés dans le plan horizontal à chaque fois d'un angle d'inclinaison β de 3° à 7°, de préférence de 5°, par rapport à la direction de laminage.

3. Dispositif selon les revendications 1 et 2, **caractérisé en ce que** la longueur des ailes (11 ; 12) mesurée sur la périphérie des têtes de coupe (3 ; 4) constitue 1/4 à 1/6e de la périphérie des têtes de coupe (3 ; 4).

4. Dispositif selon l'une ou plusieurs des revendications 1 à 3, **caractérisé en ce que**, pour minimiser la vitesse relative entre le fil de laminage (2) et les ailes (11 ; 12), la vitesse de rotation des têtes de coupe (3 ; 4) correspond approximativement à la vitesse du fil de laminage (2) en mouvement.
